# EUROPEAN PATENT SPECIFICATION

(11) **EP 2 993 028 B1**
(45) Date of publication and mention of the grant of the patent: **22.04.2020**
(21) Application number: 15180545.4
(22) Date of filing: 11.08.2015
(51) Int. Cl.: B29C 53/04, F16L 59/02

(54) **ARRANGEMENT AND METHOD FOR MAKING A PIPE INSULATION SECTION OF MINERAL WOOL AND A PIPE INSULATION SECTION**
ANORDNUNG UND VERFAHREN ZUR HERSTELLUNG EINES ROHRISOLATIONSABSCHNITTS VON MINERALWOLLE UND ROHRISOLATIONSABSCHNITT
AGENCEMENT ET PROCÉDÉ DE FABRICATION D'UNE SECTION D'ISOLATION DE TUYAUX EN LAINE MINÉRALE ET SECTION D'ISOLATION DE TUYAUX

(30) Priority: 12.08.2014 FI 20145710
(43) Date of publication of application: 09.03.2016
(73) Proprietor: Paroc Group Oy, 00180 Helsinki (FI)
(72) Inventor: SKIPPARI, Sami, 53500 Lappeenranta (FI); HJELT, Tuomo, 53850 Lappeenranta (FI)
(74) Representative: LEITZINGER OY

(56) References cited:
- WO-A1-95/20708
- US-A- 3 050 106
- US-A- 3 939 022
- US-A- 5 030 192
- US-A- 5 642 601

## Description

One object of the invention is a first arrangement for continuous making of a pipe insulation section of mineral wool as defined in the preamble of the independent claim 1.

A second object of the invention is a second arrangement for continuous making of a pipe insulation section of mineral wool as defined in the preamble of the independent claim 2.

The invention relates also to a method for continuous making of a pipe insulation section of mineral wool as defined in the independent claim 10.

Yet another aspect of the disclosure is a pipe insulation section manufactured with the methods according to the invention. The mineral wool in this application can be stone wool or glass wool.

### Prior art

Finnish patent publication FI 118822 B discloses one apparatus and method for continuous manufacture of a mineral wool pipe section for insulating purposes. This solution comprises feeding a mineral wool mat around a core in such a manner that the subsequent mat lap at least partially overlaps the preceding mat lap and compressing the mineral wool mat fed around the core against the core by means of an outer roller assembly consisting of at least two adjustably arranged rollers for producing an insulation pipe section preform.

Finnish patent publication FI 120775 B discloses another apparatus and method for continuously manufacturing a mineral wool pipe section for insulating purposes. This solution, on the other hand, comprises feeding wool in the form of loose material into a space between a core and a substantially tubular external mould surrounding it. In this solution, for the purpose of defining the form of a pipe section preform, its internal and external surfaces are first cured by heating at least a portion of the core and the external mould, and this is followed by curing a layer still remaining uncured between the cured internal and external surfaces.

In the foregoing solutions, the splitting of an insulation pipe section is performed in a separate process with separate splitting means after curing the insulation pipe section to be made. It would be beneficial, if a split for the insulation pipe section, and preferably even an additional slit for the same, could be provided simultaneously with some other process step in order to make the insulation pipe section throughput time shorter and to eliminate energy consumption resulting from a separate splitting process.

US patent US 3 050 106 A discloses an apparatus for forming pipe insulation. A felt of any type of fibrous insulating material, such as asbestos, rock wool, glass or synthetic fiber, is fed onto an endless conveyor belt where it is successively contacted by a plurality of mandrels carried by an endless chain mounted above and moving in the same direction as the conveyor belt. The insulating material and the belt are wrapped around the mandrels by a shoehorn former and the composite is fed into an oven for curing.

US patent US 3 939 022 A discloses a solution to manufacture longitudinally split cylindrical thermal insulation coverings for hot and cold pipes, which coverings are commonly referred to as "one piece pipe insulator sections" and are kerfed opposite their slots to enable them to be opened sufficiently wide to be fitted over a pipe. According to one aspect of US 3 939 022 A, a strip-shaped felt of fibrous material containing hardenable bonding material is pulled between stationary forming surfaces which deform the cross-sectional shape of the felt by sliding contact with opposite sides of the felt, curing the bonding material while the felt is in its deformed shape, and subsequently cutting the deformed felt into separate lengths, the pulling of the felt being effected from beyond the stationary forming surfaces.

WO 95/20708 A discloses a mineral fiber plate product produced by producing a first non-woven mineral fiber web containing mineral fibers predominantly arranged in a first longitudinal direction and segments of the first mineral fiber web are arranged in a partly mutually overlapping relationship for producing a second non-woven mineral fiber web, which contains mineral fibers generally transversely relative to one another. The second mineral fiber web is folded transversely for producing a third non-woven mineral fiber web. The third non-woven mineral fiber web is cured for producing a cured non-woven mineral fiber web from which a mineral fiber plate, or alternatively, a tubular insulating element is cut.

### Description of the invention

What has now been come up with is an invention relating to an arrangement and method and enabling elimination of the prior art drawbacks.

A first arrangement of the invention is characterized by the features of the characterizing part of the independent claim 1.

A second arrangement of the invention is characterized by the features of the characterizing part of the independent claim 2.

Preferred embodiments for first and second arrangements of the invention are presented in the subsequent dependent claims 3-9.

A method of the invention is characterized by the features as defined in the independent method claim 10.

### Detailed description of the invention

The invention will now be described in more detail with reference to the accompanying drawings.
Fig. 1 shows schematically an insulation pipe section of the invention in a perspective view.
Fig. 2 shows, in a perspective view, a core which makes up a component in an arrangement of the invention used for manufacturing an insulation pipe section of mineral wool.
Fig. 3a shows, in a perspective view, pleating means which make up a component in an arrangement of the invention.
Fig. 3b shows, in a perspective view, a few alternative pleating means which make up a component in an arrangement of the invention.
Fig. 4 shows, in a perspective view from behind in line direction, pleating means which make up a component in an arrangement of the invention.
Fig. 5 shows, in a perspective view from behind in line direction, alternative pleating means which make up a component in an arrangement of the invention.

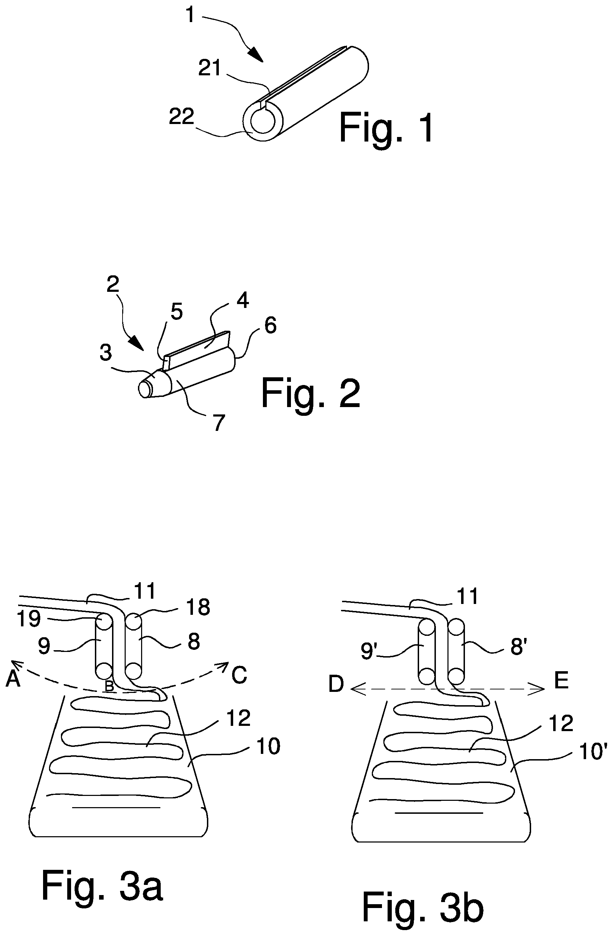

Fig. 1 shows, in a schematic perspective view, an insulation pipe section of mineral wool according to the invention, which comprises a lengthwise split 21 and an opposite lengthwise internal slit 22. In the subsequently described embodiment, the mineral wool consists of stone wool, but optionally it can also be glass wool.

Pleating means 8, 9, 10 shown in fig. 3a are used for pleating a web of mineral wool 11 in the direction of production line, i.e. in its lengthwise direction, onto a moving conveyor 10 into a mat 12 to desired width and thickness, such that each pleat folds up at least partially on top of the preceding pleat. The pleating means 8, 9, 10 comprise a mineral wool advancing pendulum 8, 9, and a conveyor 10 on top of which the web of mineral wool 11 is pleated by means of the pendulum to produce the mat 12. The pendulum 8, 9 comprises two spaced-apart belt conveyors 8 and 9, each consisting of an endless belt and two rollers circled by the belt. The conveyor 10 is set in horizontal level under the pendulum 8, 9. The main surfaces of belts included in the belt conveyors 8, 9 are parallel with a lengthwise direction of the conveyor 10 present below the pendulum. Thus, the web of mineral wool 11 to be pleated is supplied from between the belt conveyors 8 and 9 with one lengthwise edge leading the way onto the moving conveyor 10 present thereunder and conveying the mat of mineral wool 12 established thereon towards a core 2. The pendulum has its belt conveyors 8 and 9 each respectively articulated by reeling shafts of the upper rollers 18 and 19 for enabling the belt conveyors 8 and 9 to be swung between two extreme end positions A and C. The swinging motion of the belt conveyors 8 and 9 takes place in such a way that, in a space between the belt conveyors from which the web of mineral wool is delivered, the pendulum has the belts of each of its belt conveyors 8 and 9 substantially parallel to each other across the entire swinging motion from one extreme end position A to the other extreme end position C. In a lowermost and neutral position B of the conveyors 8 and 9, each conveyor is in a vertical orientation. The conveyor 10 carries the established mineral mat to contact with bending means and a core.

Fig. 3b depicts one application solution alternative for the application of pleating means shown in fig. 3a, wherein there is no pendulum but, instead, there is employed a feeder, which can be e.g. a feeder made up by two parallel belt conveyors 8', 9', for supplying from a specific distance above a conveyor 10' a web of mineral wool onto the conveyor 10' which is oscillated back and forth in lateral direction from an extreme end position D to another extreme end position E. The conveyor 10' is set on a horizontal level underneath the pendulum's feeder 8', 9'. Exactly as in the application of fig. 3a, the main surfaces of belts included in the belt conveyors 8', 9' are parallel with a lengthwise direction of the conveyor 10' present thereunder. At the same time, the conveyor 10' carries a mat 12 pleated thereon forward in the production line direction, i.e. in a lengthwise direction of the conveyor. Thus, a web of mineral wool 11 to be pleated is supplied from between the belt conveyors 8' and 9' onto the moving conveyor 10' present thereunder. The conveyor 10' can be followed by a belt conveyor (not shown in the figures), which is stationary in its lateral direction and which then carries the mat established by pleating to contact with bending means and a core.

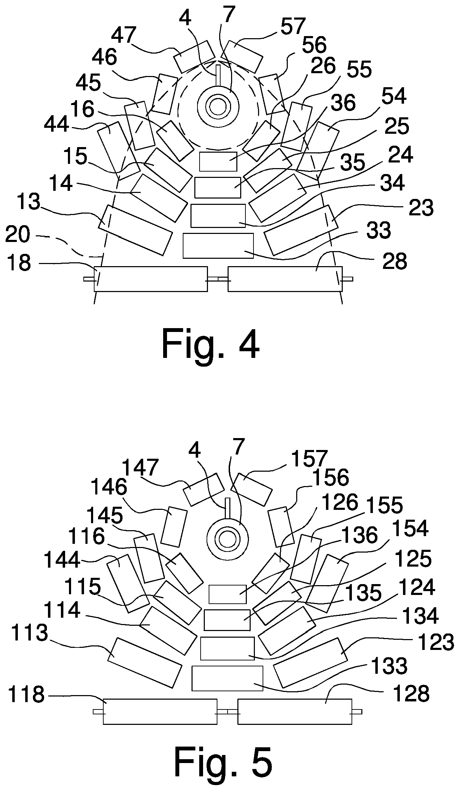

The core 2, making up a component in an arrangement of the invention and shown in figs. 2 and 4, includes a section, having a cylinder-shaped outer surface 7 which constitutes most of a lengthwise external surface of the core 2. However, the core has what in a production line proceeding direction is its first end provided with a truncated cone-shaped section 3 which, in a lengthwise direction of core 2, broadens towards and merges over its outer surface with the cylinder-shaped section 7. The core 2 has its section 7 of cylinder-shaped outer surface fixedly fitted with a first blade 4 extending along the center axis and a radial direction of the core and having two opposite and parallel planar main faces. The first blade 4 has what in a production line direction is its first vertical edge 5 designed in a wedge type shape in a lengthwise direction of the blade and the core, such that the wedge has its apex constituted by the blade's first edge. The truncated cone 3 at a first end of the core 2 has its shape and the first blade 4 has its wedge type shape capable of facilitating the conveyance of mineral wool in the form of a mat to contact with an upstream end of the core 2 and the first blade 4.

Fig. 4 presents certain bending means, by means of which the mat of mineral wool 11 established by pleating is gradually bent in lengthwise direction against and advanced along a substantially cylinder-shaped external surface 7a of the core 2 and each main face of the first blade 4, such that at a downstream end of the core 2, at the latest, the mat has become fully bent against and to cover the substantially cylinder-shaped external surface of the core 2 and each main face of the first blade. The longitudinal axis of the core 2 is horizontal.

In the embodiment of fig. 4, the bending means consist of an endless belt 20 and rollers 18, 20; 13, 33, 23; 44, 14, 34, 24, 54; 45, 15, 35, 25, 55; 47, 46, 16, 36, 26, 56, 57 installed thereunder, whose reeling shafts lie crosswise to a traveling direction of the belt conveyor and a lengthwise axis of the core 7. The belt conveyor shown in fig. 4 comprises roller groups consisting of rollers set side by side both in lateral direction and in longitudinal direction. In each laterally oriented roller group, the rollers included in a group have their reeling shafts on the same transverse plane with respect to the length of the belt conveyor and the core. In a lateral direction of the belt conveyor, the rollers 18 and 28 make up a first roller group, the rollers 13, 33 and 23 a second roller group, the rollers 44, 14, 34, 24 and 54 a third roller group, the rollers 45, 15, 35, 25 and 55 a fourth roller group, and the rollers 47, 46, 16, 36, 26, 56 and 57 a fifth roller group. In the first roller group, the shafts of rollers 18 and 28 lie on a horizontal plane and crosswise with respect to the lengthwise axis of the core 7. In the roller groups from second to fifth, the rollers 33, 34, 35 and 36, which lie directly underneath the core 7, are the only ones that have their shafts oriented on a horizontal plane. The horizontally lying rollers 18, 28, 33, 34, 35 and 36 of roller groups from first to fifth are all on the same horizontal plane which is located that much lower than the horizontal plane on which the core 2 is located that between a horizontal plane extending by way of what in vertical direction are the highest points on the peripheries of these particular rollers and a horizontal plane extending by way of what in vertical direction are the lowest points on the periphery of the cylindrical external surface 7 of the core 2 exists a height difference which is substantially equal to or smaller than the thickness of the mineral wool mat, depending on a required degree of compression.

In the first roller group, the number of rollers is just two (rollers 18 and 28), and these are relatively long. In the second roller group, the number of rollers is three (rollers 13, 33 and 23), but these are shorter than those in the first group and the outermost rollers 13 and 33 inclined to an equal extent upwards at what are the outer ends thereof relative to the core. In the third roller group, the number of rollers is four (rollers 44, 14, 34 and 24) which are shorter than those of the second group and wherein the rollers 14 and 24 have their outer end upward inclination exceeding the inclination of the second group's rollers 13 and 23, and the outermost rollers 44 and 54 have an inclination which exceeds that of the rollers 14 and 24. The fourth roller group has likewise four rollers, but the rollers 45, 15, 35, 25 and 55 have the upward inclination of the outer ends exceeding that of a respective roller in the third roller group. In the fifth roller group, the number of rollers is seven (rollers 47, 46, 16, 36, 26, 56 and 57), the rollers are shorter than those in the preceding roller groups and make up a substantially circular-shaped ring consisting of rollers and surrounding essentially the entire core at a second end thereof in order to obtain the manufactured pipe insulation in a shape as round as possible and at a downstream end of the core with an external surface as neat as possible.

The inclination of roller groups can be adjustable or permanent. The setup and degrees of inclination for rollers in the roller groups are such that, at an upstream end of the belt conveyor, the surface of a belt 20 is first planar but, when approaching the core and at an upstream end of the core, it gradually turns first into a trough type shape and then, at a downstream end of the core, the belt 20 has its surface gradually turning into a cylindrical shape, thereby obtaining the manufactured pipe insulation with an external surface in a desired shape as round (cylindrical) as possible and, at a downstream end of the core, with an external surface as neat as possible.

This way, the bending means designed as a belt conveyor carry the mat of mineral wool 12 forward towards and against the core 2 in such a way that the mat 12 is first remodeled by the surface of the belt conveyor's belt into an open trough type shape and, finally, at a downstream end of the core 2, into a substantially cylindrical tubular shape which is already provided with a split lengthwise of the pipe insulation. This takes place by pressing the mat 12 with a cylindrical section of the belt conveyor, at a downstream end of the core, tightly around the core 2 against its cylindrical external surface 7 and against the two main faces of the first blade 4.

The number of rollers in the bending means taking the form of a belt conveyor and shown in fig. 4 is not confined to the above-presented number, but it can fluctuate according to the size of a pipe insulation section. In addition, the distance of rollers from the core may fluctuate according to insulation thickness. The belt 20 of a belt conveyor can have its material consisting e.g. of plastics or a steel wire mesh belt also with a capability of being bent to the external surface shape of a pipe section.

The curing means comprise generally first curing means for heating the external surface 7 of the core 2 and two main faces of the first blade 4 with a view to curing the internal bore and the split of a pipe insulation section and second curing means for curing the external surface and the pipe insulation section comprehensively. In case the belt of bending means in the form of a belt conveyor is a steel wire mesh belt, the heating thereof may being about light curing in the outer surface of a pipe insulation's mineral wool and the comprehensive curing is carried out with a separate curing unit, which may partially coincide with the formation of an internal bore in the pipe section and immediately thereafter, or at a considerably later stage on the line. In this case, the steel wire mesh belt makes up a part of the second curing means or serves as an additional curing element in its own right.

Fig. 5 displays a solution alternative to the bending means shown in fig. 4, which does not include a belt and which therefore is solely made up of rollers set up in a manner similar to those in the bending means of fig. 4. Hence, in a manner similar to the embodiment of fig. 4, the embodiment of fig. 5 comprises five roller groups in lateral orientation. The rollers 118 and 128 make up a first roller group, the rollers 113, 133 and 123 a second roller group, the rollers 144, 114, 134, 124 and 154 a third roller group, the rollers 145, 115, 135, 125 and 155 a fourth roller group, and the rollers 147, 146, 116, 136, 126, 156 and 157 a fifth roller group. All rollers in this embodiment are preferably metal rollers.

In the first roller group, the number of rollers is just two (rollers 118 and 128) and these are relatively long. In the second roller group, the number of rollers is three (rollers 113, 133 and 123), but these are shorter than those in the first group and the outermost rollers 113 and 133 inclined to an equal extent upwards at the outer ends thereof relative to the core 7. In the third roller group, the number of rollers is four (rollers 144, 114, 134 and 124) which are shorter than those of the second group and wherein the rollers 114 and 124 have their outer end upward inclination exceeding the inclination of the second group's rollers 113 and 123, and the outermost rollers 144 and 154 have an inclination which exceeds that of the rollers 114 and 124. The fourth roller group has likewise four rollers, but the rollers 145, 115, 135, 125 and 155 have the upward inclination of their outer ends exceeding that of a respective roller in the third roller group. In the fifth roller group, the number of rollers is seven (rollers 147, 146, 116, 136, 126, 156 and 157), the rollers are shorter than those in the preceding roller groups and make up a substantially circular-shaped ring consisting of rollers and surrounding essentially the entire core at a second end thereof in order to obtain the manufactured pipe insulation in a shape as round as possible and at a downstream end of the core with an external surface as neat as possible.

The horizontally lying rollers 118, 128, 133, 134, 135 and 136 of roller groups from first to fifth are all on the same horizontal plane which is located that much lower than the horizontal plane on which the core 2 is located that between a horizontal plane extending by way of what in vertical direction are the highest points on the peripheries of these particular rollers and a horizontal plane extending by way of what in vertical direction are the lowest points on the periphery of the cylindrical external surface 7 of the core 2 exists a height difference which is substantially equal to or smaller than the thickness of the mineral wool mat, depending on a required degree of compression.

In a manner similar to what is described in connection with the embodiment of fig. 4, the curing means used in connection with the embodiment of fig. 5 comprise generally first curing means for heating the external surface 7 of the core and two main faces of the first blade 4 with a view to curing the internal bore and the split of a pipe insulation and second curing means for curing the external surface and the pipe insulation comprehensively. In case the rollers in roller groups are metal rollers, these can be heated to a curing temperature and thereby can be used for slightly curing the mineral wool of a manufacture pipe insulation over its external surface while conveying the same forward in the traveling direction of the wool line. The longitudinal axis of the core 2 is horizontal.

The core 2 can have its substantially tubular external surface 7 provided with a second blade (not shown in the figures), which extends in the direction of the center axis and in the lateral direction of the core and which is parallel with the first blade 4 and has two opposite and parallel main faces, and which is located on the external surface 7 of the core 2 opposite to the first blade, whereby the pipe insulation has its lengthwise internal slit made at the same time as the mat is being remodeled into a substantially tubular shape at the core. This second blade can also be capable of being heated in order to produce a cured internal slit therewith.

The foregoing arrangement enables a pipe insulation section of mineral wool to be made continuously with the following method steps of:
- pleating a web of mineral wool 11 into a mat 12 to desired width and thickness, such that each pleat folds up partially on top of the preceding pleat,
- bending the mat 12 for one lap around a core 2 with a substantially tubular external surface 7. The core 2 has its external surface 7 provided with a first blade 4, which extends in the direction of its center axis and in its lateral direction and which has two opposite and parallel planar main faces
- heating the core 2 at least over its external surface 7 and the first blade 4 over its two main faces for curing the pipe insulation's internal bore and split.

The pleating is achieved in such a way that the web of mineral wool 11 is supplied by means of a pendulum 8, 9 onto a moving conveyor 10 by swinging the web of mineral wool 11 back and forth in a direction crosswise relative to a traveling direction of the conveyor 10. The mat 12, which has been produced by pleating, is bent for one lap around the core 2 with the substantially tubular external surface 7 in such a way that what in the traveling direction are border areas of the mat are folded gradually upward and closer to each other in the traveling direction, whereby the mat is first refashioned into an open trough type shape and, finally at the core, into a substantially tubular shape with a preformed lengthwise split by pressing the mat tightly around the core against its external surface and against the first blade's two main faces. Finally, the pipe insulation section is cured over its external surface and in its entirety.

The pipe insulation can have its lengthwise internal slit made at the same time as the mat is being remodeled into a substantially tubular shape at the core, such that the core 2 has its substantially tubular external surface 7 provided with a second blade (not shown in the figures), which extends in the direction of the center axis and in the lateral direction of the core and which is parallel with the first blade 2 and has two opposite and parallel main faces, and which is located on the external surface 7 of the core 2 opposite to the first blade 2.

## Claims

1. An arrangement for continuous making of a pipe insulation section of mineral wool, said arrangement comprising:
- a core having an external surface (7) for defining the shape of the internal surface of a pipe insulation section (1) to be made
- means whereby mineral wool is capable of being placed against the external surface (7) of the core
- curing means whereby the pipe insulation section (1) to be made is capable of being cured to its substantially tubular shape,
- pleating means (8, 9, 10 or 8', 9', 10') which enable a web of mineral wool (11) to be pleated into a mat (12) to desired width and thickness, such that each pleat folds up at least partially on top of the preceding pleat
- a first blade (4), which is present on the external surface (7) of the core (2) and extends in the direction of its center axis and in its radial direction and which has two opposite and parallel planar main faces,
and that the means whereby mineral wool is capable of being placed against the external surface (7) of the core (2) consist of bending means (18, 20; 13, 33, 23; 44, 14, 34, 24, 54; 45, 15, 35, 25, 55; 47, 46, 16, 36, 26, 56, 57; or 118, 120; 113, 133, 123; 144, 114, 134, 124, 154; 145, 115, 135, 125, 155; 147, 146, 116, 136, 126, 156, 157), by which the mat (12), produced by pleating, is capable of being bent against and advanced along the external surface (7) of the core and each main face of the first blade (4) over at least a part of the length of the external surface (7) of the core and each main face of the first blade (4), **characterised in that** the bending means consist of a belt conveyor which comprises an endless belt (20) and rollers (18, 20; 13, 33, 23; 44, 14, 34, 24, 54; 45, 15, 35, 25, 55; 47, 46, 16, 36, 26, 56, 57), which are installed inside the same and upon which the endless belt (20) circles and which have their reeling shafts lying transversely relative to the longitudinal axis of the core (2), whereby the number of rollers (18, 20; 13, 33, 23; 44, 14, 34, 24, 54; 45, 15, 35, 25, 55; 47, 46, 16, 36, 26, 56, 57) below the belt (20) in a lateral direction thereof at an upstream end of the belt conveyor is at least one (18, 20) and the rollers in the belt conveyor in a lateral direction of the belt (20) increase in number but decrease in length towards a downstream end of the core, and that, as the rollers (18, 20; 13, 33, 23; 44, 14, 34, 24, 54; 45, 15, 35, 25, 55; 47, 46, 16, 36, 26, 56, 57) present under border areas of the endless belt are, in the traveling direction of the carrier surface of the belt conveyor's belt (20), adapted in an increasing extent to incline against the belt's edges and the external surface (7) of the core (2), so that what in the belt conveyor's traveling direction is a left-hand side border area of the belt (20) turns in the traveling direction gradually more and more clockwise against the core's external surface as well as against one main face of the first blade (4) and the belt has its right-hand side border area turning gradually in the traveling direction more and more counterclockwise against the core's external surface as well as against the other main face of the first blade (4), whereby the belt (20) has its both border areas inclining gradually upwards and closer to each other in such a way that, by means of the belt conveyor, the mat (12) is capable of being first remodeled into an open and gradually deepening trough type shape against and along the core (2) and then at a downstream end of the core, at the latest, into a substantially tubular shape against and along the external surface of the core (2) and the two main faces of the first blade (4) by pressing the mat (12) tightly against the external surface (7) of the core (2) and the two main faces of the first blade (4) while at the same time conveying the mat forward by means of the belt conveyor's belt (2).

2. An arrangement for continuous making of a pipe insulation section of mineral wool, said arrangement comprising:
- a core having an external surface (7) for defining the shape of the internal surface of a pipe insulation section (1) to be made
- means whereby mineral wool is capable of being placed against the external surface (7) of the core
- curing means whereby the pipe insulation section (1) to be made is capable of being cured to its substantially tubular shape,
- pleating means (8, 9, 10 or 8', 9', 10') which enable a web of mineral wool (11) to be pleated into a mat (12) to desired width and thickness, such that each pleat folds up at least partially on top of the preceding pleat
- a first blade (4), which is present on the external surface (7) of the core (2) and extends in the direction of its center axis and in its radial direction and which has two opposite and parallel planar main faces,
and that the means whereby mineral wool is capable of being placed against the external surface (7) of the core (2) consist of bending means (18, 20; 13, 33, 23; 44, 14, 34, 24, 54; 45, 15, 35, 25, 55; 47, 46, 16, 36, 26, 56, 57; or 118, 120; 113, 133, 123; 144, 114, 134, 124, 154; 145, 115, 135, 125, 155; 147, 146, 116, 136, 126, 156, 157), by which the mat (12), produced by pleating, is capable of being bent against and advanced along the external surface (7) of the core and each main face of the first blade (4) over at least a part of the length of the external surface (7) of the core and each main face of the first blade (4), **characterised in that** the bending means consist of a roller conveyor which comprises a plurality of rollers (118, 120; 113, 133, 123; 144, 114, 134, 124, 154; 145, 115, 135, 125, 155; 147, 146, 116, 136, 126, 156, 157) having their reeling shafts lying transversely relative to a longitudinal axis of the core (2), whereby the number of rollers (118, 120; 113, 133, 123; 144, 114, 134, 124, 154; 145, 115, 135, 125, 155; 147, 146, 116, 136, 126, 156, 157) in a lateral direction at the upstream end of the roller conveyor (in line direction) is at least one (118, 120) and the rollers in the roller conveyor in a lateral direction thereof increase in number but decrease in length towards the downstream end of the core (2), the rollers (118, 120; 113, 133, 123; 144, 114, 134, 124, 154; 145, 115, 135, 125, 155; 147, 146, 116, 136, 126, 156, 157) being, in a traveling direction of the roller conveyor, adapted in an increasing extent to incline against the external surface (7) of the core (2), such that the rollers, present in what in the roller conveyor's traveling direction is a left-hand side border area of the roller conveyor, are turned or capable of being turned in the traveling direction gradually more and more clockwise against the core's external surface (7) and one main face of the first blade (4) and the rollers, present in right-hand side border area of the roller, are turned or capable of being turned in the traveling direction gradually more and more counterclockwise against the core's external surface and the other main face of the first blade (4), whereby the roller conveyor has its border areas in the line direction inclining gradually upwards and closer to each other in such a way that, by means of the roller conveyor, the mat (12) is capable of being first remodeled into an open and gradually deepening trough type shape against the external surface of the core (2) and then at a downstream end of the core, at the latest, into a substantially tubular shape against the external surface (7) of the core (2) and the two main faces of the first blade (4) by pressing the mat (12) tightly against the external surface (7) of the core (2) and the two main faces of the first blade (4) while at the same time conveying the mat forward by means of the roller conveyor.

3. An arrangement according to any one of claims 1-2 wherein the pleating means comprise a pendulum (8, 9, 18, 19) supplying a web of mineral wool (11), and a conveyor (10) on top of which the web of mineral wool (11) is capable of being pleated by means of the pendulum into the mat (12) as the conveyor (10) has its carrier surface moving forward at the same time as the pendulum, while supplying the web of mineral wool, swings back and forth in a direction lateral to the conveying direction of the conveyor (10).

4. An arrangement according to any one of claims 1-2, wherein the pleating means comprise a stationary feeder (8', 9') supplying a web of mineral wool, and a conveyor (10') present thereunder and moving back and forth in lateral direction and on top of which, by virtue of a lateral movement of the conveyor, the web of mineral wool (11) is capable of being pleated into the mat (12) while the conveyor (10') has its carrier surface moving forward.

5. An arrangement according to any one of claims 1-4, wherein the external surface (7) of the core (2) is substantially cylinder-shaped, and is provided with a second blade which extends in the direction of the center axis and in the radial direction of the core and which is parallel with the first blade (4) and which has two opposite and parallel planar main faces and which is located on the external surface (7) of the core (2) opposite to the first blade (4), whereby the first blade is used for making a lengthwise split in the pipe insulation section and the second blade is used for making a lengthwise slit in the pipe insulation section at the same time as the mat is being remodeled into a substantially cylindrical shape on the core.

6. An arrangement according to any of claims 1-4, wherein the curing means comprise first curing means for heating at least the external surface (7) of the core (2) and the two main faces of the first blade (4) for curing the internal bore and the split of the pipe insulation section, and second curing means for curing the pipe insulation section comprehensively along the outer surface.

7. An arrangement according to claim 5, wherein the curing means comprise first curing means for heating at least the external surface (7) of the core (2) and the two main faces of the first blade (4) and the second blade for curing the internal bore, the internal slit, and the split of the pipe insulation section, and second curing means for curing the pipe insulation section comprehensively along the outer surface.

8. An arrangement according to claims 1 and 5 or 1 and 6, wherein the belt conveyor's belt (20) is a steel wire mesh belt, which is capable of bending into a cylindrical shape and which is provided with a capability of being heated, whereby the steel wire mesh belt functions as a pre-curing element for the pipe insulation section's outer surface.

9. An arrangement according to claims 2 and 5 or 2 and 6, wherein the roller conveyor's rollers (118, 120; 113, 133, 123; 144, 114, 134, 124, 154; 145, 115, 135, 125, 155; 147, 146, 116, 136, 126, 156, 157) are metal rollers provided with a capability of being heated, whereby the metal rollers function as pre-curing means for the pipe insulation section's outer surface.

10. A method for continuous making of a pipe insulation section of mineral wool, in which method the internal surface of a pipe insulation section of mineral wool is defined by means of an external surface (7) of a core, the method comprising:
- pleating a web of mineral wool (11) into a mat (12) to desired width and thickness, such that each pleat folds up at least partially on top of the preceding pleat,
- advancing the mat (12) along the external surface of a core, which is provided with a first blade (4) extending in the direction of its center axis and in its radial direction and having two opposite and parallel planar main faces, by bending and advancing the mat (12) against and along the external surface (7) of the core and each main face of the first blade (4) thereof over at least a part of the length of the external surface (7) of the core and each main face of the first blade (4), said bending being performed using a bending means defined in the characterizing part of claim 1 or claim 2
- heating the core (2) at least over its external surface (7) and the first blade (4) over its two main faces for curing the internal bore and the split of the insulation pipe section.

## Patentansprüche

1. Anordnung zur kontinuierlichen Herstellung eines Rohrisolierabschnitts aus Mineralwolle, wobei die Anordnung Folgendes umfasst:
- einen Kern mit einer Außenfläche (7) zur Definition der Form der Innenfläche eines herzustellenden Rohrisolierabschnitts (1)
- Mittel, mit denen Mineralwolle an die Außenfläche (7) des Kerns angelegt werden kann
- Aushärtungsmittel, durch die der herzustellende Rohrisolierungsabschnitt (1) zu seiner im Wesentlichen röhrenförmigen Form ausgehärtet werden kann,
- Faltmittel (8, 9, 10 oder 8', 9', 10'), die es ermöglichen, eine Bahn aus Mineralwolle (11) in eine Matte (12) in der gewünschten Breite und Dicke zu falten, sodass jede Falte zumindest teilweise auf die vorhergehende Falte aufgefaltet wird
- eine erste Platte (4), die auf der Außenfläche (7) des Kerns (2) vorhanden ist und sich in Richtung ihrer Mittelachse und in ihrer radialen Richtung erstreckt und die zwei gegenüberliegende und parallele planare Hauptflächen aufweist,
und dass die Mittel, mit denen die Mineralwolle an die Außenfläche (7) des Kerns (2) angelegt werden kann, aus Biegemitteln bestehen (18, 20; 13, 33, 23; 44, 14, 34, 24, 54; 45, 15, 35, 25, 55; 47, 46, 16, 36, 26, 56, 57; oder 118, 120; 113, 133, 123; 144, 114, 134, 124, 154; 145, 115, 135, 125, 155; 147, 146, 116, 136, 126, 156, 157), durch die die durch Falten erzeugte Matte (12) gegen die Außenfläche (7) des Kerns und jede Hauptfläche der ersten Platte (4) gebogen und entlang dieser Fläche über mindestens einen Teil der Länge der Außenfläche (7) des Kerns und jeder Hauptfläche des ersten Platte (4) vorgeschoben werden kann, **dadurch gekennzeichnet, dass** die Biegemittel aus einem Bandförderer bestehen, der ein Endlosband (20) und Rollen umfasst (18, 20; 13, 33, 23; 44, 14, 34, 24, 54; 45, 15, 35, 25, 55; 47, 46, 16, 36, 26, 56, 57), die im Inneren derselben installiert sind und auf denen das Endlosband (20) kreisförmig umläuft und deren Wickelachsen quer zur Längsachse des Kerns (2) liegen, wobei die Anzahl der Rollen (18, 20; 13, 33, 23; 44, 14, 34, 24, 54; 45, 15, 35, 25, 55; 47, 46, 16, 36, 26, 56, 57) unter dem Band (20) in einer seitlichen Richtung davon an einem stromaufwärtigen Ende des Bandförderers mindestens eine (18, 20) ist und die Rollen in dem Bandförderer in einer seitlichen Richtung des Bandes (20) in der Anzahl zunehmen, aber in der Länge zu einem stromabwärts gelegenen Ende des Kerns hin abnehmen, und dass, wenn die Rollen (18, 20; 13, 33, 23; 44, 14, 34, 24, 54; 45, 15, 35, 25, 55; 47, 46, 16, 36, 26, 56, 57), die unter den Randbereichen des Endlosbandes vorhanden sind, in Laufrichtung der Trägerfläche des Bandes (20) des Bandförderers in zunehmendem Maße an die Bandkanten und die Außenfläche (7) des Kerns (2) angepasst sind, sodass der in Laufrichtung des Bandförderers linke Randbereich des Bandes (20) sich in Laufrichtung allmählich mehr und mehr im Uhrzeigersinn gegen die Außenfläche des Kerns sowie gegen die eine Hauptfläche der ersten Platte (4) dreht und der rechte Randbereich des Bandes sich allmählich in Laufrichtung mehr und mehr gegen den Uhrzeigersinn gegen die Außenfläche des Kerns sowie gegen die andere Hauptfläche der ersten Platte (4) dreht, wobei der Gurt (20) mit seinen beiden Randbereichen allmählich nach oben und näher zueinander geneigt ist, sodass die Matte (12) mittels des Gurtförderers zunächst am und entlang des Kerns (2) und spätestens an einem stromabwärts gelegenen Ende des Kerns in eine offene und sich allmählich vertiefende Trogform umgestaltet werden kann, in eine im Wesentlichen röhrenförmige Form gegen und entlang der Außenfläche des Kerns (2) und der beiden Hauptflächen der ersten Platte (4), indem die Matte (12) fest gegen die Außenfläche (7) des Kerns (2) und die beiden Hauptflächen der ersten Platte (4) gepresst wird, während gleichzeitig die Matte mit Hilfe des Förderbandes (2) vorwärts transportiert wird.

2. Anordnung zur kontinuierlichen Herstellung eines Rohrisolierabschnitts aus Mineralwolle, wobei die Anordnung folgendes umfasst:
- einen Kern mit einer Außenfläche (7) zur Festlegung der Form der Innenfläche eines herzustellenden Rohrisolierabschnitts (1)
- Mittel, mit denen Mineralwolle an die Außenfläche (7) des Kerns angelegt werden kann
- Aushärtungsmittel, durch die der herzustellende Rohrisolierungsabschnitt (1) zu seiner im Wesentlichen röhrenförmigen Form ausgehärtet werden kann,
- Faltmittel (8, 9, 10 oder 8', 9', 10'), die es ermöglichen, eine Bahn aus Mineralwolle (11) in eine Matte (12) in der gewünschten Breite und Dicke zu falten, sodass jede Falte zumindest teilweise auf die vorhergehende Falte aufgefaltet wird
- eine erste Platte (4), die auf der Außenfläche (7) des Kerns (2) vorhanden ist und sich in Richtung ihrer Mittelachse und in ihrer radialen Richtung erstreckt und die zwei gegenüberliegende und parallele planare Hauptflächen aufweist,
und dass die Mittel, mit denen die Mineralwolle an die Außenfläche (7) des Kerns (2) angelegt werden kann, aus Biegemitteln bestehen (18, 20; 13, 33, 23; 44, 14, 34, 24, 54; 45, 15, 35, 25, 55; 47, 46, 16, 36, 26, 56, 57; oder 118, 120; 113, 133, 123; 144, 114, 134, 124, 154; 145, 115, 135, 125, 155; 147, 146, 116, 136, 126, 156, 157), durch die die durch Falten erzeugte Matte (12) gegen die Außenfläche (7) des Kerns und jede Hauptfläche der ersten Platte (4) gebogen und entlang dieser Fläche über mindestens einen Teil der Länge der Außenfläche (7) des Kerns und jeder Hauptfläche der ersten Platte (4) vorgeschoben werden kann,
**dadurch gekennzeichnet, dass** die Biegemittel aus einem Rollenförderer bestehen, der eine Vielzahl von Rollen umfasst (118, 120; 113, 133, 123; 144, 114, 134, 124, 154; 145, 115, 135, 125, 155; 147, 146, 116, 136, 126, 156, 157), deren Wickelwellen quer zu einer Längsachse des Kerns (2) liegen, wobei die Anzahl der Rollen (118, 120; 113, 123; 144, 114, 134, 124, 154; 145, 115, 135, 125, 155; 147, 146, 116, 136, 126, 156, 157) in einer seitlichen Richtung am stromaufwärtigen Ende des Rollenförderers (in Längsrichtung) mindestens eine (118, 120) ist und die Rollen in dem Rollenförderer in einer seitlichen Richtung desselben in der Anzahl zunehmen, aber in der Länge zum stromabwärts gelegenen Ende des Kerns (2) hin abnehmen, wobei die Rollen (118, 120; 113, 133, 123; 144, 114, 134, 124, 154; 145, 115, 135, 125, 155; 147, 146, 116, 136, 126, 156, 157), die in Laufrichtung der Rollenbahn in zunehmendem Maße gegen die Außenfläche (7) des Kerns (2) geneigt sind, sodass die Rollen in Laufrichtung der Rollenbahn in einem linken Randbereich der Rollenbahn liegen, in der Laufrichtung allmählich mehr und mehr im Uhrzeigersinn gegen die Außenfläche (7) des Kerns und die eine Hauptfläche der ersten Platte (4) gedreht oder drehbar sind und die im rechten Seitenrandbereich der Walze vorhandenen Walzen allmählich mehr und mehr gegen den Uhrzeigersinn gegen die Außenfläche des Kerns und die andere Hauptfläche der ersten Platte (4) gedreht oder drehbar sind, wobei die Randbereiche des Rollenförderers in Linienrichtung allmählich nach oben und näher zueinander geneigt sind, sodass die Matte (12) mittels des Rollenförderers zunächst gegen die Außenfläche des Kerns (2) und dann an einem stromabwärts gelegenen Ende des Kerns in eine offene und sich allmählich vertiefende trogförmige Form umgestaltet werden kann, in eine im Wesentlichen röhrenförmige Form gegen die Außenfläche (7) des Kerns (2) und die beiden Hauptflächen der ersten Platte (4) gebracht werden, indem die Matte (12) fest gegen die Außenfläche (7) des Kerns (2) und die beiden Hauptflächen der ersten Platte (4) gepresst wird, während gleichzeitig die Matte mittels des Rollenförderers vorwärts transportiert wird.

3. Anordnung nach einem der Ansprüche 1 bis 2, wobei die Faltmittel ein Pendel (8, 9, 18, 19), das eine Mineralwollbahn (11) zuführt, und einen Förderer (10) umfassen, auf dessen Oberseite die Mineralwollbahn (11) mit Hilfe des Pendels in die Matte (12) gefaltet werden kann, wenn sich die Trägerfläche des Förderers (10) gleichzeitig mit dem Pendel vorwärts bewegt, während die Mineralwollbahn in einer Richtung seitlich zur Förderrichtung des Förderers (10) hin und her schwingt.

4. Anordnung nach einem der Ansprüche 1 bis 2, wobei die Falteinrichtung eine stationäre Zuführeinrichtung (8', 9'), die eine Mineralwollbahn zuführt, und einen darunter befindlichen Förderer (10') umfasst, der sich in seitlicher Richtung hin und her bewegt und auf dessen Oberseite durch eine seitliche Bewegung des Förderers die Mineralwollbahn (11) in die Matte (12) gefaltet werden kann, während sich die Trägerfläche des Förderers (10') vorwärts bewegt.

5. Anordnung nach einem der Ansprüche 1-4, wobei die äußere Oberfläche (7) des Kerns (2) im Wesentlichen zylinderförmig ist und mit einer zweiten Platte versehen ist, die sich in der Richtung der Mittelachse und in der radialen Richtung des Kerns erstreckt und die parallel zur ersten Platte (4) ist und die zwei gegenüberliegende und parallele planare Hauptflächen aufweist und die auf der äußeren Oberfläche (7) des Kerns (2) gegenüber der ersten Platte (4) angeordnet ist, wobei die erste Platte zur Herstellung eines Längsschlitzes im Rohrisolierungsabschnitt und die zweite Platte zur Herstellung eines Längsschlitzes im Rohrisolierungsabschnitt verwendet wird, während die Matte in eine im Wesentlichen zylindrische Form auf dem Kern umgeformt wird.

6. Anordnung nach einem der Ansprüche 1-4, wobei die Aushärtemittel erste Aushärtemittel zum Erwärmen mindestens der Außenfläche (7) des Kerns (2) und der beiden Hauptflächen der ersten Platte (4) zum Aushärten der Innenbohrung und der Teilung des Rohrisolierungsabschnitts und zweite Aushärtemittel zum umfassenden Aushärten des Rohrisolierungsabschnitts entlang der Außenfläche umfassen.

7. Anordnung nach Anspruch 5, wobei die Aushärtemittel erste Aushärtemittel zum Erwärmen mindestens der Außenfläche (7) des Kerns (2) und der beiden Hauptflächen der ersten Platte (4) und der zweiten Platte zum Aushärten der Innenbohrung, des Innenschlitzes und der Teilung des Rohrisolierungsabschnitts und zweite Aushärtemittel zum umfassenden Aushärten des Rohrisolierungsabschnitts entlang der Außenfläche umfassen.

8. Anordnung nach den Ansprüchen 1 und 5 oder 1 und 6, wobei das Band (20) des Bandförderers ein Stahldrahtnetzband ist, das sich in eine zylindrische Form biegen kann und das mit der Fähigkeit versehen ist, erwärmt zu werden, wodurch das Stahldrahtnetzband als ein Vorhärtungselement für die Außenfläche des Rohrisolierungsabschnitts fungiert.

9. Anordnung nach den Ansprüchen 2 und 5 oder 2 und 6, wobei die Rollen des Rollenförderers (118, 120; 113, 133, 123; 144, 114, 134, 124, 154; 145, 115, 135, 125, 155; 147, 146, 116, 136, 126, 156, 157) heizbare Metallrollen sind, wobei die Metallrollen als Vorhärtemittel für die Außenfläche der Rohrisolierung fungieren.

10. Verfahren zur kontinuierlichen Herstellung eines Rohrdämmungsabschnitts aus Mineralwolle, bei dem die Innenfläche eines Rohrdämmungsabschnitts aus Mineralwolle mit Hilfe einer Außenfläche (7) eines Kerns festgelegt wird, wobei das Verfahren umfasst:
- Falten einer Bahn aus Mineralwolle (11) zu einer Matte (12) in gewünschter Breite und Dicke, sodass sich jede Falte zumindest teilweise auf die vorhergehende Falte auffaltet,
- Vorschieben der Matte (12) entlang der Außenfläche eines Kerns, der mit einer ersten Platte (4) versehen ist, die sich in Richtung seiner Mittelachse und in seiner radialen Richtung erstreckt und zwei gegenüberliegende und parallele, ebene Hauptflächen aufweist, durch Biegen und Vorschieben der Matte (12) gegen und entlang der Außenfläche (7) des Kerns und jeder Hauptfläche der ersten Platte (4) desselben über mindestens einen Teil der Länge der Außenfläche (7) des Kerns und jeder Hauptfläche der ersten Platte (4), wobei das Biegen unter Verwendung eines Biegemittels durchgeführt wird, das in dem charakterisierenden Teil von Anspruch 1 oder Anspruch 2 definiert ist
- Erwärmung des Kerns (2) zumindest über seine Außenfläche (7) und der ersten Platte (4) über seine beiden Hauptflächen zur Aushärtung der Innenbohrung und der Teilung des Isolierrohrs.

## Revendications

1. Dispositif de fabrication continue d'un tronçon de tuyau isolant en laine minérale, ledit dispositif comprenant :
- un noyau comportant une surface externe (7) pour définir la forme de la surface interne d'un tronçon de tuyau isolant (1) à fabriquer,
- un moyen grâce auquel la laine minérale peut être placée contre la surface externe (7) du noyau,
- des moyens de durcissement, le tronçon de tuyau isolant (1) à fabriquer pouvant être durci jusqu'à sa forme substantiellement tubulaire,
- un moyen de plissage (8, 9, 10 ou 8', 9', 10') qui permet à une bande de laine minérale (11) d'être plissée en une natte (12) à une largeur et épaisseur désirées, de sorte que chaque pli se replie au moins partiellement sur le dessus du pli précédent,
- une première lame (4) qui est présente sur la surface externe (7) du noyau (2) et s'étend dans la direction de son axe central et dans sa direction radiale et qui comporte deux faces principales planaires opposées et parallèles,
et le moyen grâce auquel la laine minérale peut être placée contre la surface externe (7) du noyau (2) consiste en un moyen de cintrage 18,20; 13,33,23; 44,14,34,24,54;45,15,35,25,55; 47,46,16,36,26,56,57; ou 118,120; 113,133,123; 144,114,134,124,154; 145,115, 135,125,155; 147,146,116,136,126,156,157) grâce auquel la natte (12) produite par plissage peut être cintrée contre et avancée le long de la surface externe (7) du noyau et de chaque face principale de la première lame (4) sur au moins une partie de la longueur de la surface externe (7) du noyau et chaque face principale de la première lame (4), **caractérisé en ce que** le moyen de cintrage consiste en un convoyeur à bande qui comprend une bande continue (20) et des rouleaux (18,20; 13,33,23; 44,14,34,24,54; 45,15,35,25,55; 47,46,16,36,26,56,57) qui sont installés à l'intérieur de celle-ci et sur lesquels la bande sans fin (20) tourne et dont les arbres d'enroulement reposent transversalement par rapport à l'axe longitudinal du noyau (2), le nombre de rouleaux (18,20; 13,33,23; 44,14,34,24,54; 45,15,35,25,55; 47,46,16,36,26,56,57) se trouvant en dessous de la bande (20) dans sa direction latérale à une extrémité amont du convoyeur à bande étant d'au moins un (18,20) et les rouleaux du convoyeur à bande augmentant en nombre dans une direction latérale de la bande (20) mais diminuant en longueur vers une extrémité aval du noyau, et que, du fait que les rouleaux (18,20; 13,33,23; 44,14,34,24, 54; 45,15,35,25,55; 47,46,16,36,26,56,57) présents sous les zones limites de la bande sans fin sont, dans le sens de déplacement de la surface porteuse de la bande du convoyeur à bande (20), aptes de manière croissante à s'incliner contre les bords de la bande et la surface externe (7) du noyau (2), de sorte que ce qui, dans la direction de déplacement du convoyeur à bande, est une zone limite latérale gauche de la bande (20), tourne dans la direction de déplacement graduellement de plus en plus dans le sens des aiguilles d'une montre contre la surface externe du noyau et contre une face principale de la première lame (4) et que la bande a sa zone limite droite qui tourne graduellement dans la direction de déplacement de plus en plus dans le sens des aiguilles d'une montre contre la surface externe du noyau et contre l'autre face principale de la première lame (4), la bande (20) ayant ses deux zones limites s'inclinant graduellement vers le haut et plus près l'une de l'autre de manière à ce que, au moyen du convoyeur à bande, la natte (12) soit apte à être d'abord remodelée en une forme de type creux ouverte et devenant graduellement de plus en plus profonde contre et le long du noyau (2) et ensuite, à une extrémité aval du noyau au plus tard, en une forme substantiellement tubulaire contre et le long de la surface externe du noyau (2) et des deux faces principales de la première lame (4) en serrant la natte (12) étroitement contre la surface externe (7) du noyau (2) et les deux faces principales de la première lame (4) tout en convoyant en même temps la natte vers l'avant au moyen de la bande du convoyeur à bande (2).

2. Dispositif de fabrication continue d'un tronçon de tuyau isolant en laine minérale, ledit dispositif comprenant :
- un noyau comportant une surface externe (7) pour définir la forme de la surface interne d'un tronçon de tuyau isolant (1) à fabriquer,
- un moyen grâce auquel la laine minérale peut être placée contre la surface externe (7) du noyau,
- des moyens de durcissement, le tronçon de tuyau isolant (1) à fabriquer pouvant être durci jusqu'à sa forme substantiellement tubulaire,
- un moyen de plissage (8, 9, 10 ou 8', 9', 10') qui permet à une bande de laine minérale (11) d'être plissée en une natte (12) à une largeur et épaisseur désirées, de sorte que chaque pli se replie au moins partiellement sur le dessus du pli précédent,
- une première lame (4) qui est présente sur la surface externe (7) du noyau (2) et s'étend dans la direction de son axe central et dans sa direction radiale et qui comporte deux faces principales planaires opposées et parallèles,
et le moyen grâce auquel la laine minérale peut être placée contre la surface externe (7) du noyau (2) consistant en un moyen de cintrage (18,20; 13,33,23; 44,14,34,24,54; 45,15,35,25,55; 47,46,16,36,26,56,57; ou 118,120; 113,133,123; 144,114,134,124,154; 145,115, 135,125,155; 147,146,116,136,126,156,157) grâce auquel la natte (12) produite par plissage peut être cintrée contre et avancée le long de la surface externe (7) du noyau et de chaque face principale de la première lame (4) sur au moins une partie de la longueur de la surface externe (7) du noyau et chaque face principale de la première lame (4), **caractérisé en ce que** le moyen de cintrage consiste en un convoyeur à rouleaux qui comprend une pluralité de rouleaux (118,120; 113,133,123; 144,114,134,124,154; 145,115,135,125,155; 147,146,116,136,126,156,157) dont les arbres d'enroulement reposent transversalement par rapport à un axe longitudinal du noyau (2), le nombre de rouleaux (118,120;113,133,123; 144,114,134,124, 154; 145,115,135,125,155; 147,146,116,136,126,156,157) dans une direction latérale à l'extrémité amont du convoyeur à rouleaux (dans le sens linéaire) étant d'au moins un (118,120) et les rouleaux du convoyeur à bande augmentant en nombre dans sa direction latérale mais diminuant en longueur vers l'extrémité aval du noyau (2), les rouleaux (118,120; 113,133,123; 44,114, 134,124,154; 145,115, 135,125,155; 147,146,116,136, 126,156,157) étant, dans un sens de déplacement du convoyeur à rouleaux, aptes de manière croissante à s'incliner contre la surface externe (7) du noyau (2), de sorte que les rouleaux présents du fait que la direction de déplacement du convoyeur est une zone limite latérale gauche du convoyeur à rouleaux, sont tournés ou peuvent être tournés dans la direction de déplacement graduellement de plus en plus dans le sens des aiguilles d'une montre contre la surface externe du noyau (7) et une face principale de la première lame (4) et que les rouleaux présents dans la zone limite latérale droite du rouleau sont tournés ou peuvent être tournés dans la direction de déplacement graduellement de plus en plus dans le sens des aiguilles d'une montre contre la surface externe du noyau et l'autre face principale de la première (4), le convoyeur à rouleaux ayant ses zones limites situées dans la direction linéaire qui s'inclinent graduellement vers le haut et plus près l'une de l'autre de manière à ce que, au moyen du convoyeur à rouleaux, la natte (12) soit apte à être d'abord remodelée en une forme de type creux ouverte et devenant graduellement de plus en plus profonde contre la surface externe du noyau (2) et ensuite, à une extrémité aval du noyau au plus tard, en une forme substantiellement tubulaire contre la surface externe (7) du noyau (2) et les deux faces principales de la première lame (4) en serrant la natte (12) étroitement contre la surface externe (7) du noyau (2) et les deux faces principales de la première lame (4) tout en convoyant en même temps la natte vers l'avant au moyen du convoyeur à rouleaux.

3. Dispositif selon l'une quelconque des revendications 1 et 2, dans lequel le moyen de plissage comprend un balancier (8, 9,18, 19) fournissant une bande de laine minérale (11), et un convoyeur (10) sur le dessus duquel la bande de laine minérale (11) est apte à être plissée au moyen du balancier pour former la natte (12) du fait que le convoyeur (10) a sa surface porteuse se déplaçant vers l'avant en même temps que le balancier, tout en fournissant la natte de laine minérale, oscille d'avant en arrière dans une direction latérale par rapport à la direction de convoyage du convoyeur (10).

4. Dispositif selon l'une quelconque des revendications 1 et 2, dans lequel le moyen de plissage comprend un alimentateur stationnaire (8', 9') fournissant une bande de laine minérale, et un convoyeur (10') présent en-dessous et se déplaçant d'avant en arrière dans la direction latérale et sur le dessus duquel, en vertu d'un mouvement latéral du convoyeur, la bande de laine minérale (11) est apte à être plissée pour former la natte (12) pendant que le convoyeur (10') a sa surface porteuse se déplaçant vers l'avant.

5. Dispositif selon l'une quelconque des revendications 1 à 4, dans lequel la surface externe (7) du noyau (2) est substantiellement de forme cylindrique, et est pourvue d'une seconde lame qui s'étend dans la direction de l'axe central et dans le sens radial du noyau et qui est parallèle à la première lame (4) et qui a deux faces principales planaires opposées et parallèles et qui se trouve sur la surface externe (7) du noyau (2) à l'opposé de la première lame (4), la première lame étant utilisée pour pratiquer une fente dans le sens de la longueur dans le tronçon de tuyau isolant et la seconde lame étant utilisée pour pratiquer une fente dans le sens de la longueur dans le tronçon de tuyau isolant en même temps que la natte est remodelée en une forme substantiellement cylindrique sur le noyau.

6. Dispositif selon l'une quelconque des revendications 1 à 4, dans lequel les moyens de durcissement comprennent un premier moyen de durcissement pour chauffer au moins la surface externe (7) du noyau (2) et les deux faces principales de la première lame (4) pour durcir l'alésage interne et la fente du tronçon de tuyau isolant, et un second moyen de durcissement pour durcir globalement le tronçon de tuyau isolant le long de la surface externe.

7. Dispositif selon la revendication 5, dans lequel les moyens de durcissement comprennent un premier moyen de durcissement pour chauffer au moins la surface externe (7) du noyau (2) et les deux faces principales de la première lame (4) et de la seconde lame pour durcir l'alésage interne, la fente interne, et la fente du tronçon de tuyau isolant, et un second moyen de durcissement pour durcir globalement le tronçon de tuyau isolant le long de la surface externe.

8. Dispositif selon les revendications 1 et 5 ou et 1 ou 6, dans lequel la bande du convoyeur à bande (20) est une bande en maille de fil d'acier qui est apte à se centrer en une forme cylindrique et qui est pourvue de la capacité d'être chauffée, la bande en maille de fil d'acier faisant office d'élément de pré-durcissement pour la surface externe du tronçon de tuyau isolant.

9. Dispositif selon les revendications 2 et 5 ou et 2 ou 6, dans lequel les rouleaux du convoyeur à rouleaux (118,120; 113,133,123; 144,114,134,124,154; 145,115, 135,125,155; 147,146,116,136,126,156,157) sont des rouleaux métalliques pourvus de la capacité d'être chauffés, les rouleaux métalliques faisant office de moyen de pré-durcissement pour la surface externe du tronçon de tuyau isolant.

10. Procédé de fabrication continue d'un tronçon de tuyau isolant en laine minérale, dans lequel procédé la surface interne d'un tronçon de tuyau isolant en laine minérale est définie au moyen d'une surface externe (7) d'un noyau, ce procédé comprenant :
- le plissage d'une bande de laine minérale (11) en une natte (12) à une largeur et épaisseur désirées, de sorte que chaque pli se replie au moins partiellement sur le dessus du pli précédent,
- l'avancement de la natte (12) le long de la surface externe d'un noyau qui est pourvue d'une première lame (4) s'étendant dans la direction de son axe central et dans sa direction radiale et ayant deux faces principales planaires opposées et parallèles, en centrant et en avançant la natte (12) contre et le long de la surface externe (7) du noyau et de chaque face principale de sa première lame (4) sur au moins une partie de la longueur de la surface externe (7) du noyau et de chaque face principale de la première lame (4), ledit cintrage étant réalisé en utilisant un moyen de cintrage défini dans la partie de caractérisation de la revendication 1 ou la revendication 2,
- le chauffage du noyau (2) au moins sur sa surface externe (7) et de la première lame (4) sur ses deux faces principales pour durcir l'alésage interne et la fente du tronçon de tuyau isolant.
